# FASCICULE DE BREVET EUROPEEN

(11) **EP 3 077 226 B1**
(45) Date de publication et mention de la délivrance du brevet: **15.09.2021**
(21) Numéro de dépôt: 14805598.1
(22) Date de dépôt: 01.12.2014
(51) Int. Cl.: B60G 7/00, F16F 1/36, F16F 7/12, F16F 1/371

(54) **BRAS DE SUSPENSION D'UN VEHICULE AUTOMOBILE DESTINE A ABSORBER UN CHOC LATERAL**
AUFHÄNGUNGSARM FÜR EIN KRAFTFAHRZEUG ZUR ABSORPTION EINES SEITENAUFPRALLS
SUSPENSION ARM FOR A MOTOR VEHICLE INTENDED TO ABSORB A SIDE IMPACT

(30) Priorité: 03.12.2013 FR 1362001
(43) Date de publication de la demande: 12.10.2016
(73) Titulaire: Renault S.A.S., 92100 Boulogne-Billancourt (FR)
(72) Inventeur: ROLLET, Rémi, F-91190 Gif-sur-Yvette (FR); CARIOU, Anthony, F-72550 Coulans-sur-Gee (FR); SAUDEMONT, Yoann, F-28210 Les Pinthières (FR); MONSELET, Thierry, F-72190 Sarge-lès-Le-Mans (FR)
(86) Numéro de dépôt international: PCT/EP2014/076115
(87) Numéro de publication internationale: WO 2015/082406

(56) Documents cités:
- DE-A1- 10 338 625
- JP-A- 2010 023 713
- US-A1- 2002 005 621
- US-A1- 2011 272 911
- US-A1- 2011 298 192

## Description

### Domaine technique de l'invention

L'invention concerne le domaine des véhicules automobile et plus particulièrement la suspension de ces véhicules

L'invention a pour objet plus particulièrement un bras de suspension pour véhicule automobile comprenant une première branche destinée à être raccordée à un support de roue du véhicule, et une deuxième branche destinée à être montée au châssis du véhicule

Un autre objet de la présente invention est un véhicule incluant au moins un bras de suspension tel que décrit.

Un exemple d'un tel bras de suspension est divulgué par US-20110272911, qui décrit le préambule de la revendication 1.

### État de la technique

Les véhicules automobiles sont en général équipés de plusieurs bras de suspension transversaux qui comportent chacun une première branche destinée à être raccordée à un support de roue du véhicule, notamment un porte fusée, et une deuxième branche destinée à être montée au châssis du véhicule, notamment le berceau du véhicule lorsque l'on parle de la roue avant.

Les bras de suspension avant sont sollicités lors de chocs appliqués à la roue correspondante selon une palette d'angles allant du choc purement longitudinal au véhicule au choc purement transversal au véhicule. Ils sont en général trop fusibles en cas de chocs longitudinaux ou obliques (efforts de ruine trop faibles) et sont trop résistants en choc transversal pur, engendrant des déformations soit du berceau (impliquant une réparation à coût élevé), soit du porte fusée (cas de défaillance difficile à détecter).

### Objet de l'invention

Le but de la présente invention est de proposer une solution permettant une certaine fusibilité d'un bras de suspension de véhicule, notamment lors d'un choc transversal au véhicule.

On tend vers ce but notamment en ce que la première branche est conformée de sorte que son profil général comporte, entre une zone de raccordement au support de roue et une zone de raccordement de la première branche à la deuxième branche, une courbure essentiellement comprise dans un plan vertical lorsque le bras est monté sur le véhicule.

Selon l'invention, la courbure est conformée de telle sorte à créer une zone préférentielle de déformation, ou de rupture, de la première branche en cas d'impact transversal au véhicule sur sa roue en vue d'absorber au moins en partie l'énergie dudit impact.

Selon l'invention, le bras comporte une première ligne courbe et au moins une partie d'un premier bord de la première branche s'étend le long de ladite première ligne courbe, ledit premier bord étant disposé du côté avant du véhicule lorsque le bras est monté sur le véhicule.

La première branche comporte un deuxième bord opposé au premier bord selon l'axe longitudinal du véhicule et disposé du côté arrière du véhicule lorsque le bras est monté sur le véhicule, le deuxième bord étant inclus dans un premier plan incluant les deux extrémités longitudinales opposée de la première branche et/ou deux bords longitudinaux de la deuxième branche, ledit premier plan étant sensiblement perpendiculaire à un deuxième plan incluant la première ligne courbe.

Selon l'invention, la courbure comporte une deuxième ligne courbe, et la première branche comporte un deuxième bord, opposé au premier bord selon l'axe longitudinal du véhicule et disposé du côté arrière du véhicule lorsque le bras est monté sur le véhicule, s'étendant le long de la deuxième ligne courbe, lesdits premier et deuxième bords étant reliés par une partie de liaison de la première branche.

Selon l'invention, la courbure étant bornée entre la première ligne courbe et la deuxième ligne courbe, la partie de liaison évolue selon une surface de courbure de la première branche incluant les première et deuxième lignes courbes.

Les première et deuxième lignes courbes sont différentes.

Selon une variante, la courbure présente selon la longueur de la première branche, un profil sinusoïdal, ou un profil arqué notamment sans point d'inflexion.

L'invention est aussi relative à un véhicule automobile comportant au moins un bras tel que décrit.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue de dessus d'un bras de suspension selon une réalisation particulière de l'invention,
- la figure 2 est une vue d'un mode de réalisation particulier de la figure 1 selon la vue A-A,
- la figure 3 est une vue en perspective de la figure 1 selon le mode de réalisation particulier de la figure 2,
- la figure 4 est une vue d'un autre mode de réalisation particulier de la figure 1 selon la vue A-A,
- la figure 5 illustre ledit autre mode de réalisation particulier de la figure 4 par superposition des coupes B-B, C-C et D-D de la figure 1,
- la figure 6 illustre une variante de réalisation de la courbure appliquée au mode de réalisation de la figure 4.

### Description de modes préférentiels de l'invention

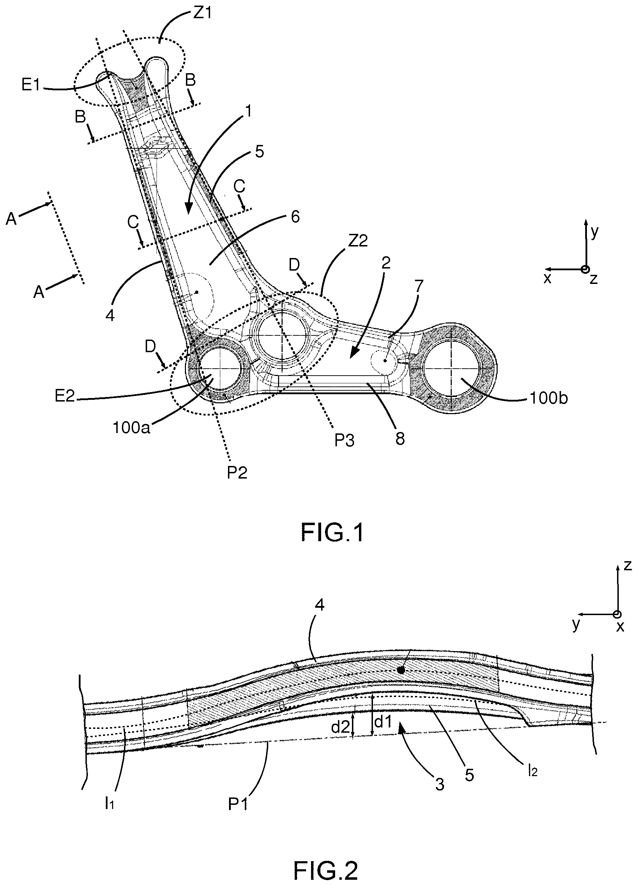

Le bras de suspension décrit ci-après permet, grâce à son profil, de faciliter l'absorption d'un choc latéral au véhicule équipé dudit bras. Comme illustré à la figure 1, le bras de suspension pour véhicule automobile (aussi appelé bras de suspension latéral dans le domaine) comprend une première branche 1 destinée à être raccordée à un support de roue du véhicule, notamment un porte fusée, et une deuxième branche 2 destinée à être montée au châssis du véhicule, notamment au berceau moteur du véhicule. La première branche 1 est conformée de sorte que son profil général comporte, entre une zone de raccordement Z1 au support de roue et une zone de raccordement Z2 de la première branche 1 à la deuxième branche 2, une courbure essentiellement comprise dans un plan vertical lorsque le bras est monté sur le véhicule.

En fait, un élément de montage de la première branche 1 au support de roue peut être accouplé à une première extrémité E1 de la première branche 1 disposée au niveau de la zone de raccordement Z1. Le bras peut être raccordé au châssis via deux ouvertures 100a et 100b destinées à être associées à des éléments de montage adaptés. L'ouverture 100a est située au niveau d'une deuxième extrémité E2 de la première branche 1, ladite deuxième extrémité E2 étant située au niveau de la zone de raccordement Z2. Les première et deuxième extrémités E1, E2 de la première branche 1 sont des extrémités longitudinales opposées de cette dernière. Les ouvertures 100a et 100b sont respectivement formées à deux extrémités longitudinales opposées de la deuxième branche 2 dont l'une des extrémités longitudinales coïncide avec la deuxième extrémité E2 de la première branche 1.

Selon l'invention, la courbure est présente au moins dans une zone centrale de la première branche 1 située à équidistance de la zone de raccordement Z1 et de la zone de raccordement Z2.

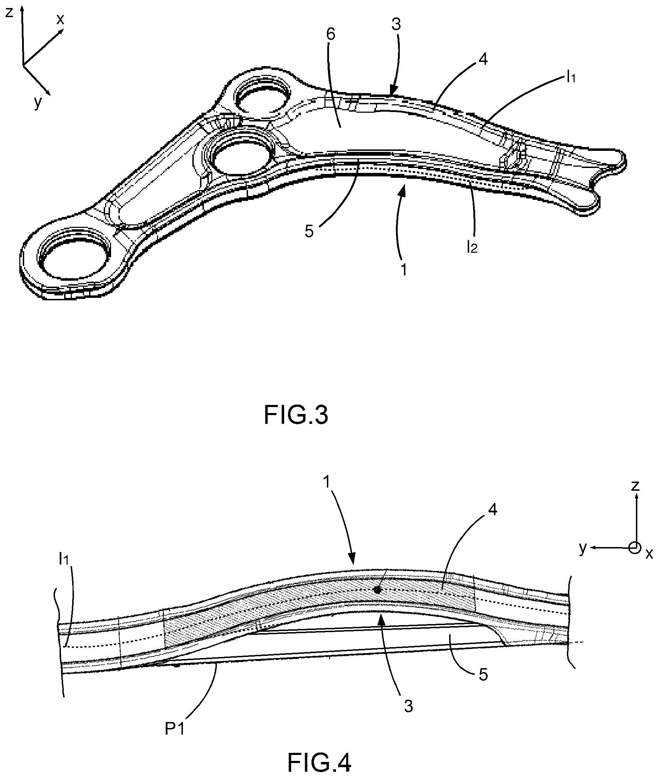

Cette courbure n'est pas visible à la figure 1 car elle évolue dans un plan sensiblement perpendiculaire au plan de la figure 1. Les figures 2 et 4 permettent de visualiser la courbure 3 où P1 représente le plan sur lequel repose le bras à la figure 1 (P1 étant ici un plan perpendiculaire au plan de la figure 2, respectivement de la figure 4, et passant par la ligne en pointillés visée par la référence P1). La vue en perspective associée à la figure 3, permet aussi d'illustrer la présence de la courbure 3.

Par « profil général », on entend que la première branche 1 est définie entre une face inférieure et une face supérieure de telle sorte que lesdites faces inférieure et supérieure suivent l'évolution d'une surface courbée virtuelle, notamment médiane, disposée entre les faces inférieure et supérieure. Dans certain cas, cette surface virtuelle médiane définit une surface de symétrie de la première branche 1 entre ses faces inférieure et supérieure. Lorsque le bras est monté sur le véhicule, la face inférieure est celle orientée vers le sol et la face supérieure celle orientée vers le ciel.

De préférence, la courbure 3 est telle que la première branche 1 présente une concavité orientée vers le sol lorsque le bras est monté sur un véhicule. Alternativement, la concavité peut aussi être orientée vers le ciel lorsque le bras est monté sur un véhicule. En fait, l'orientation de la concavité peut être déterminée en fonction de l'architecture du véhicule et notamment de la place disponible pour loger le bras de suspension.

Par « courbure essentiellement comprise dans un plan vertical » on entend que la courbure présente des composantes tridimensionnelles et que la composante verticale Z est supérieure aux composantes X et Y. Par convention, dans la présente description, l'axe X est un axe longitudinal du véhicule passant par l'avant et par l'arrière du véhicule, et dont la flèche est orientée vers l'avant du véhicule. L'axe Y est quant à lui un axe transversal au véhicule et perpendiculaire à l'axe X. Le repère XY représente un plan horizontal du véhicule lorsqu'il repose sur ses roues sur un sol horizontal. L'axe Z est un axe perpendiculaire aux axes X et Y, et est un axe vertical au véhicule dont la flèche est orientée vers le ciel lorsque le véhicule repose sur ses roues. Ces axes Y, X et Z sont repris aux figures 1 à 4 et 6 pour représenter un positionnement avantageux des différents éléments représentés au sein d'un véhicule automobile. Dans ce paragraphe, le mot « axe » peut être remplacé par le mot « composante ».

En fait, la courbure 3 évoluant selon une direction verticale permet d'amoindrir la résistance en compression en cas de choc latéral au véhicule au niveau du support de roue. Autrement dit, la courbure 3 est conformée de telle sorte à créer une zone préférentielle de déformation, ou de rupture, de la première branche 1 en cas d'impact transversal au véhicule sur sa roue en vue d'absorber au moins en partie l'énergie dudit impact.

Une courbure peut être définie selon une surface de courbure délimitée par une pluralité de lignes courbes.

En ce sens, la courbure 3 comporte une première ligne courbe l₁ (visible aux figures 2 à 4) et au moins une partie (voire tout) d'un premier bord 4 (figures 1 à 4) de la première branche 1 s'étend le long de ladite première ligne courbe l₁ (incluse dans le plan P2 perpendiculaire au plan de la figure 1), ledit premier bord 4 étant disposé du côté avant du véhicule lorsque le bras est monté sur le véhicule.

Par « s'étendre le long d'une ligne courbe », on entend que le bord correspondant adopte une forme extérieure courbée sensiblement (ou exactement) selon la courbure de ladite ligne courbe.

Selon une première réalisation donnée dans l'exemple des figures 1 à 3, la courbure 3 comporte une deuxième ligne courbe l₂ et la première branche 1 comporte un deuxième bord 5, opposé au premier bord selon l'axe longitudinal X du véhicule et disposé du côté arrière du véhicule lorsque le bras est monté sur le véhicule. Au moins une partie du (voire tout le) deuxième bord s'étend le long de la deuxième ligne courbe l₂, lesdits premier et deuxième bords 4, 5 étant reliés par une partie de liaison 6 de la première branche 1. Comme l'illustre la figure 1, la deuxième ligne courbe l₂ est incluse dans un plan P3 perpendiculaire au plan de la figure 1. Le plan P3 passe par la zone de raccordement Z1 et la zone de raccordement Z2 et peut être sécant au plan P2.

Selon un exemple particulier associé à la première réalisation la première ligne courbe l₁ (et donc le premier bord 4 courbé associé) présente une profondeur de concavité de 17mm, et la deuxième ligne courbe l₂ (et donc le deuxième bord 5 courbé associé) présente une profondeur de concavité de 10mm. Sur la figure 2, la profondeur de concavité associée au premier bord 4 est la distance d₁ maximale de séparation du premier bord 4 par rapport au plan P1 sur lequel les deux extrémités longitudinales opposées dudit premier bord 4 reposent. Par ailleurs, toujours sur la figure 2 la profondeur de concavité associée au deuxième bord 5 est la distance d₂ maximale de séparation du deuxième bord 5 par rapport au plan P1 sur lequel les deux extrémités longitudinales opposées dudit deuxième bord 5 reposent. L'avantage du décalage entre les deux bords est d'optimiser la résistance du bras aux sollicitations longitudinales suivant X.

On comprend des figures 1 à 3 que la courbure 3 peut être bornée entre la première ligne courbe l₁ et la deuxième ligne courbe l₂. Dans ce cas, la partie de liaison 6 évolue selon une surface de courbure de la première branche 1 incluant les première et deuxième lignes courbes.

Les première et deuxième lignes courbes l₁, l₂ sont différentes.

Dans l'exemple de la figure 3, la courbure de la première branche 1 au niveau de la première ligne l₁ est plus importante que la courbure de la première branche 1 au niveau de la deuxième ligne courbe l₂.

La différence de courbure entre les première et deuxième lignes courbes permet notamment une ruine plus aisée lors d'un choc transversal au véhicule et appliqué sur ledit bras lorsqu'il est monté sur le véhicule tout en conservant une configuration optimale de la tenue du bras en choc longitudinal au véhicule.

Selon une deuxième réalisation illustrée aux figures 1 et 4, la première branche 1 comporte un deuxième bord 5 opposé au premier bord 4 selon l'axe longitudinal X du véhicule et disposé du côté arrière du véhicule lorsque le bras est monté sur le véhicule, le deuxième bord étant inclus dans un premier plan P1 incluant les deux extrémités longitudinales opposée E1, E2 de la première branche 1 et/ou deux bords longitudinaux 7, 8 de la deuxième branche 2, ledit premier plan P1 étant sensiblement perpendiculaire à un deuxième plan P2 (perpendiculaire au plan de la figure 1 qui constitue le plan P1) incluant la première ligne courbe l₁. Dans ce cas particulier, le premier bord 4 travaille en traction en choc oblique au véhicule de sorte à rester stable tout comme le deuxième bord 5. Par ailleurs, en cas de choc latéral au véhicule, le premier bord 4 travaille alors en compression et redevient instable pour déclencher la ruine du bras.

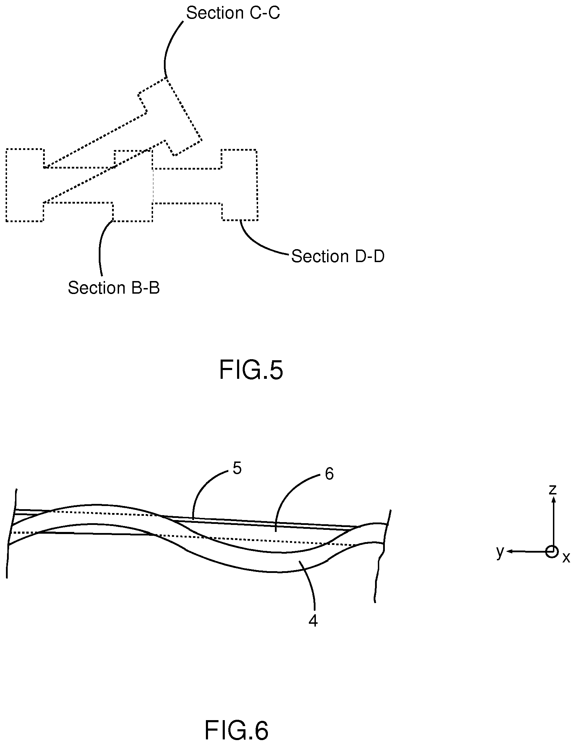

Autrement dit, on comprend que le deuxième bord 5 peut être allongé entre les deux extrémités E1 et E2 de la première branche 1 tout en restant droit (c'est-à-dire non courbé) tandis que premier bord 4 est courbé. Ceci est notamment illustré par les coupes selon B-B, C-C et D-D du bras de la figure 1 conformé selon la deuxième réalisation et superposées les unes aux autres à la figure 5. Bien entendu, dans ce cas la partie de liaison 6 de la première branche est conformée de sorte à s'adapter d'une composante planaire du deuxième bord 5 à une composante courbée du premier bord 4.

La première réalisation permet une déformation plus aisée en cas de choc latéral au véhicule que la deuxième réalisation.

De manière générale applicable à tout ce qui a été dit ci-dessus, la courbure 3 présente selon la longueur de la première branche 1, un profil sinusoïdal, ou un profil arqué notamment sans point d'inflexion. Plus particulièrement, la première ligne courbe et/ou la deuxième ligne courbe est une ligne sinusoïdale (notamment une ligne de forme en S), ou arquée notamment sans point d'inflexion (notamment une ligne en forme de banane).

L'exemple particulier de la figure 6 est représentatif d'une première branche dont le premier bord est courbé selon une ligne courbe sinusoïdale alors que le deuxième bord reste droit.

Le profil, ou ligne sinusoïdale permet de faciliter la compression du bras en cas de choc latéral au véhicule équipé dudit bras au niveau du support de roue.

De manière générale applicable à tout ce qui a été dit ci-dessus, le bras peut être formé en mono-tôle, en matière forgée, d'une bi-coquille, etc.

Le bras de suspension peut être formé en une pièce monolithique.

Selon l'invention, au moins la première branche est en acier forgé. Bien entendu, le bras de suspension peut aussi être intégralement en acier forgé.

Bien entendu, l'invention est aussi relative à un véhicule automobile, comportant au moins un bras tel que décrit précédemment. En particulier le bras est utilisé en tant que bras latéral de suspension dans le cadre d'une suspension Macpherson. On comprend alors que le bras de suspension peut s'appliquer à tout type de train comprenant un bras de suspension.

## Revendications

1. Bras de suspension pour véhicule automobile comprenant une première branche (1) destinée à être raccordée à un support de roue du véhicule, et une deuxième branche (2) destinée à être montée au châssis du véhicule, la première branche (1) étant conformée de sorte que son profil général comporte, entre une zone de raccordement (Z1) au support de roue et une zone de raccordement (Z2) de la première branche (1) à la deuxième branche (2), une courbure (3) essentiellement comprise dans un plan vertical lorsque le bras est monté sur le véhicule, la courbure (3) comportant une première ligne courbe (l₁), au moins une partie d'un premier bord (4) de la première branche (1) s'étendant le long de ladite première ligne courbe (l₁), ledit premier bord (4) étant disposé du côté avant du véhicule lorsque le bras est monté sur le véhicule, la courbure (3) comportant une deuxième ligne courbe (l₂), la première branche (1) comportant un deuxième bord (5), opposé au premier bord (4) selon l'axe longitudinal du véhicule et disposé du côté arrière du véhicule lorsque le bras est monté sur le véhicule, s'étendant le long de la deuxième ligne courbe (l₂), lesdits premier et deuxième bords (4, 5) étant reliés par une partie de liaison (6) de la première branche (1) et la courbure étant bornée entre la première ligne courbe (l₁) et la deuxième ligne courbe (l₂), la partie de liaison (6) évolue selon une surface de courbure de la première branche (1) incluant les première et deuxième lignes courbes (l₁, l₂), la courbure (3) étant conformée de telle sorte à créer une zone préférentielle de déformation, ou de rupture, de la première branche (1) en cas d'impact transversal au véhicule sur sa roue en vue d'absorber au moins en partie l'énergie dudit impact, **caractérisé en ce que** ladite courbure (3) est présente au moins dans une zone centrale de la première branche (1) située à équidistance de la zone de raccordement (Z1) au support de roue et de la zone de raccordement (Z2) de la première branche (1) à la deuxième branche (2), et **en ce qu'**au moins la première branche (1) est en acier forgé et **en ce que** les première et deuxième lignes courbes (l₁, l₂) sont différentes.

2. Bras selon la revendication 1, **caractérisé en ce que** la première branche (1) comporte un deuxième bord (5) opposé au premier bord (4) selon l'axe longitudinal du véhicule et disposé du côté arrière du véhicule lorsque le bras est monté sur le véhicule, le deuxième bord (5) étant inclus dans un premier plan incluant les deux extrémités longitudinales opposée de la première branche (1) et/ou deux bords longitudinaux de la deuxième branche (5), ledit premier plan étant sensiblement perpendiculaire à un deuxième plan incluant la première ligne courbe (l₁).

3. Bras selon l'une quelconque des revendications précédentes, **caractérisé en ce que** la courbure présente selon la longueur de la première branche (1), un profil sinusoïdal, ou un profil arqué notamment sans point d'inflexion.

4. Véhicule automobile, **caractérisé en ce qu'**il comporte au moins un bras selon l'une quelconque des revendications précédentes.

## Patentansprüche

1. Aufhängungsarm für ein Kraftfahrzeug, umfassend einen ersten Schenkel (1), der mit einem Radträger des Fahrzeugs verbunden werden soll, und einen zweiten Schenkel (2), der an dem Chassis des Fahrzeugs angebracht werden soll, wobei der erste Schenkel (1) so konfiguriert ist, dass sein allgemeines Profil zwischen einem Bereich (Z1) zur Verbindung mit dem Radträger und einem Verbindungsbereich (Z2) des ersten Schenkels (1) mit dem zweiten Schenkel (2) eine Krümmung (3) aufweist, die im Wesentlichen in einer vertikalen Ebene enthalten ist, wenn der Arm an dem Fahrzeug angebracht ist, wobei die Krümmung (3) eine erste Kurvenlinie (l₁) aufweist, wobei sich mindestens ein Teil eines ersten Rands (4) des ersten Schenkels (1) entlang der ersten Kurvenlinie (l₁) erstreckt, wobei der erste Rand (4) auf der Vorderseite des Fahrzeugs angeordnet ist, wenn der Arm am Fahrzeug angebracht ist, wobei die Krümmung (3) eine zweite Kurvenlinie (l₂) aufweist, wobei der erste Schenkel (1) einen zweiten Rand (5) gegenüber dem ersten Rand (4) entlang der Längsachse des Fahrzeugs aufweist, der auf der Hinterseite des Fahrzeugs angeordnet ist, wenn der Arm am Fahrzeug angebracht ist, wobei er sich entlang der zweiten Kurvenlinie (l₂) erstreckt, wobei der erste und der zweite Rand (4, 5) durch einen Verbindungsteil (6) des ersten Schenkels (1) verbunden sind und die Krümmung zwischen der erste Kurvenlinie (l₁) und der zweiten Kurvenlinie (l₂) begrenzt ist, wobei der Verbindungsteil (6) entlang einer Krümmungsfläche des ersten Schenkels (1), die die erste und die zweite Kurvenlinie (l₁, l₂) enthält, verläuft, wobei die Krümmung (3) so konfiguriert ist, dass ein bevorzugter Verformungs- oder Bruchbereich des ersten Schenkels (1) im Falle eines quer zum Fahrzeug verlaufenden Aufpralls auf sein Rad zwecks Absorption mindestens eines Teils der Energie des Aufpralls geschaffen wird, **dadurch gekennzeichnet, dass** die Krümmung (3) mindestens in einem mittleren Bereich des ersten Schenkels (1) vorliegt, der sich in einem gleichen Abstand von dem Bereich (Z1) zur Verbindung mit dem Radträger und dem Verbindungsbereich (Z2) des ersten Schenkels (1) mit dem zweiten Schenkel (2) befindet, und dass mindestens der ersten Schenkel (1) aus geschmiedetem Stahl besteht und dass die erste und die zweite Kurvenlinie (l₁, l₂) verschieden sind.

2. Arm nach Anspruch 1, **dadurch gekennzeichnet, dass** der erste Schenkel (1) einen zweiten Rand (5) gegenüber dem ersten Rand (4) entlang der Längsachse des Fahrzeugs aufweist, der auf der Hinterseite des Fahrzeugs angeordnet ist, wenn der Arm am Fahrzeug angebracht ist, wobei der zweite Rand (5) in einer ersten Ebene enthalten ist, die die beiden gegenüberliegenden Längsenden des ersten Schenkels (1) und/oder zwei Längsränder des zweiten Schenkels (5) enthält, wobei die erste Ebene im Wesentlichen senkrecht zu einer zweiten Ebene, die die erste Kurvenlinie (l₁) enthält, verläuft.

3. Arm nach einem der vorhergehenden Ansprüche, **dadurch gekennzeichnet, dass** die Krümmung entlang der Länge des ersten Schenkels (1) ein sinusförmiges Profil oder ein gebogenes Profil, insbesondere ohne Wendepunkt, aufweist.

4. Kraftfahrzeug, **dadurch gekennzeichnet, dass** es mindestens einen Arm nach einem der vorhergehenden Ansprüche aufweist.

## Claims

1. Suspension arm for a motor vehicle comprising a first branch (1) intended to be connected to a vehicle wheel support and a second branch (2) intended to be mounted to the vehicle chassis, the first branch (1) being shaped in such a way that its overall profile comprises, between a connection zone (Z1) for connection to the wheel support and a connection zone (Z2) at which the first branch (1) is connected to the second branch (2), a curvature (3) that is essentially comprised in a vertical plane when the arm is mounted on the vehicle, the curvature (3) comprising a first curved line (I₁), at least part of a first edge (4) of the first branch (1) extending along said first curved line (I₁), said first edge (4) being positioned on the side facing towards the front of the vehicle when the arm is mounted on the vehicle, the curvature (3) comprising a second curved line (I₂), the first branch (1) comprising a second edge (5), opposite to the first edge (4) along the longitudinal axis of the vehicle and positioned on the side facing towards the rear of the vehicle when the arm is mounted on the vehicle, extending along the second curved line (I₂), said first and second edges (4, 5) being connected by a connecting part (6) of the first branch (1) and the curvature being bounded between the first curved line (I₁) and the second curved line (I₂), the connecting part (6) evolving along a surface of curvature of the first branch (1) including the first and second curved lines (I₁, I₂), the curvature (3) being shaped in such a way as to create a preferential zone of deformation, or breakage, of the first branch (1) in the event of an impact, transverse to the vehicle, on the vehicle wheel so as to absorb at least some of the energy of said impact, **characterized in that** said curvature (3) is present at least in a central zone of the first branch (1), which zone is situated equidistant from the connection zone (Z1) for connection to the wheel support and from the connection zone (Z2) at which the first branch (1) is connected to the second branch (2), and **in that** at least the first branch (1) is made of forged steel, and **in that** the first and second curved lines (l₁, I₂) are different.

2. Arm according to Claim 1, **characterized in that** the first branch (1) comprises a second edge (5) opposite to the first edge (4) along the longitudinal axis of the vehicle and positioned on the side facing towards the rear of the vehicle when the arm is mounted on the vehicle, the second edge (5) being included in a first plane including the two opposite longitudinal ends of the first branch (1) and/or two longitudinal ends of the second branch (5), said first plane being substantially perpendicular to a second plane including the first curved line (I₁).

3. Arm according to either one of the preceding claims, **characterized in that** the curvature exhibits, along the length of the first branch (1), a sinusoidal profile, or an arched profile, notably without a point of inflection.

4. Motor vehicle, **characterized in that** it comprises at least one arm according to any one of the preceding claims.
